# EUROPEAN PATENT SPECIFICATION

(11) **EP 0 860 684 B1**
(45) Date of publication and mention of the grant of the patent: **06.10.2004**
(21) Application number: 98301280.8
(22) Date of filing: 20.02.1998
(51) Int. Cl.: G01C 9/06, G01C 15/00

(54) **Tilt detecting device**
Neigungsmessvorrichtung
Dispositif de mesure d'inclinaison

(30) Priority: 21.02.1997 JP 5397697
(43) Date of publication of application: 26.08.1998
(73) Proprietor: KABUSHIKI KAISHA TOPCON, Tokyo-to (JP)
(72) Inventor: Ohtomo, Fumio, Itabashi-ku, Tokyo-to (JP); Koizumi, Hiroshi, Itabashi-ku, Tokyo-to (JP); Kodaira, Jun-ichi, Itabashi-ku, Tokyo-to (JP)
(74) Representative: Maggs, Michael Norman

(56) References cited:
- EP-A- 0 349 074
- US-A- 5 317 810
- US-A- 5 485 266

## Description

The present invention relates to tilt detecting devices equipped with one or more electric bubble tubes, and in particular, to a tilt detecting device for precision instruments, such as survey instruments equipped with a light transmission type electric bubble tube.

Such survey instruments are generally installed at a predetermined place during surveying, and the instrument adjusted to a reference point for each surveying operation using an adjustable tilt detecting mechanism. When adjusted the survey instrument provides a reference plane or line for the subsequent survey so that the adjustment of the instrument to the reference position must be performed with high accuracy.

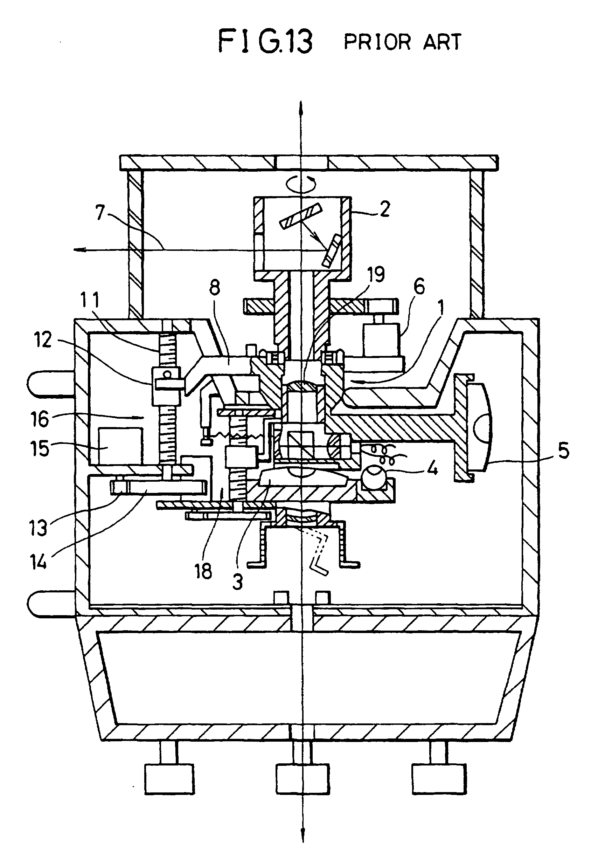

Typical of such survey instruments, is a laser survey as shown in Fig. 13. This instrument provides a reference plane by horizontally projecting a laser beam and simultaneously rotating the beam around a vertical axis. A photodetector (not shown), arranged in the reference plane receives and detects the laser beam, so that the necessary reference line or reference plane can be established.

Referring in more detail to Fig. 13, reference numeral 1 represents a laser beam emitter supported in such a manner that it can be tilted in any direction. Mounted on top of the emitter 1 is a rotator 2 rotatable about the optical axis of the laser beam emitter. The laser beam emitter 1 comprises two tilt sensors 3 and 4. Comprising transmission type electric bubble tubes operating in the horizontal plane and perpendicular one with other, and third tilt sensor 5 operating in the vertical direction. The tilt sensor 5 and the tilt sensors 3 and 4, as well as a tilt detection controller (not shown), constitute a tilt detecting device.

The rotator 2, which deflects the vertically directed laser beam emitted in the emitter to the horizontal direction, is rotated by a scanning motor 6, thereby to provide a rotating laser beam 7 rotating in a horizontal plane about a vertical axis.

The laser beam emitter 1 is supported by horizontal arms 8 and 9 (arm 9 is not visible in the figure) extending at right angles one to the other, and supported at their respective tips by a tilting mechanism.

The tilting mechanism comprises two sets of tilt driving units 16 and 17 (tilt driving unit 17 is not visible) connected respectively to the arms 8 and 9, and a tilt control unit (not shown) for controlling the tilt driving units 16 and 17. Each of the tilt driving units 16 and 17 comprises a screw 11 extending in the direction of the optical axis of the laser beam emitter 1, a nut 12 screwed on the screw 11 and in contact with tip of the arms 8 and 9, and a tilt adjusting motor 15 for rotating the screw 11 via gears 13 and 14. In the figure, reference numeral 18 represents a focus adjusting device, which enables the laser beam 7 to be focussed by moving a condenser lens 19, arranged in the optical path of the laser beam emitter 1, in the direction of the optical axis.

When the laser beam 7 is projected in the horizontal direction from the rotator 2 and the rotator 2 is rotated by the scanning motors 6, an irradiation plane is formed, which, when the laser beam 7 scanning position is set at a predetermined position by the photodetecting device, provides the desired reference plane.

Once that reference plane is established it can be used to determine an extensive range of working positions, e.g. the setting of window positions in interior finishing work during building construction, or for ground levelling in civil engineering work.

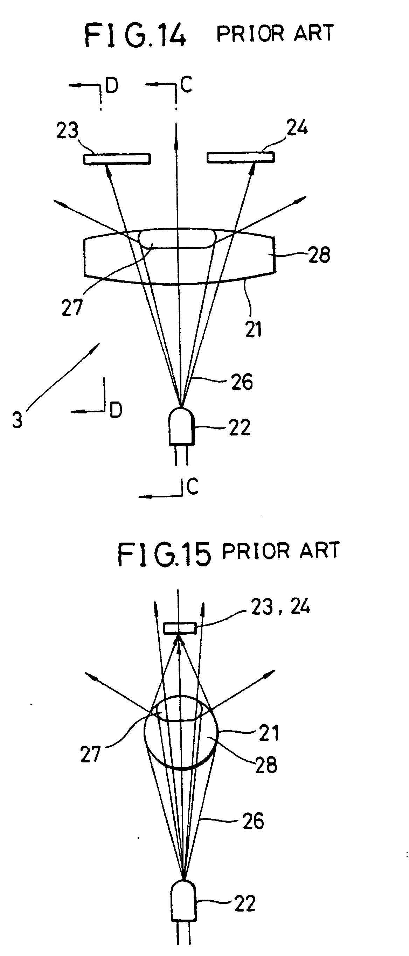

Each of the tilt sensors 3, 4 and 5 of the tilt detecting device is of a similar construction and is based on a combination of a light emitting element, a photoelectric conversion element and a bubble tube as shown and described with reference to Figs. 14 to 17.

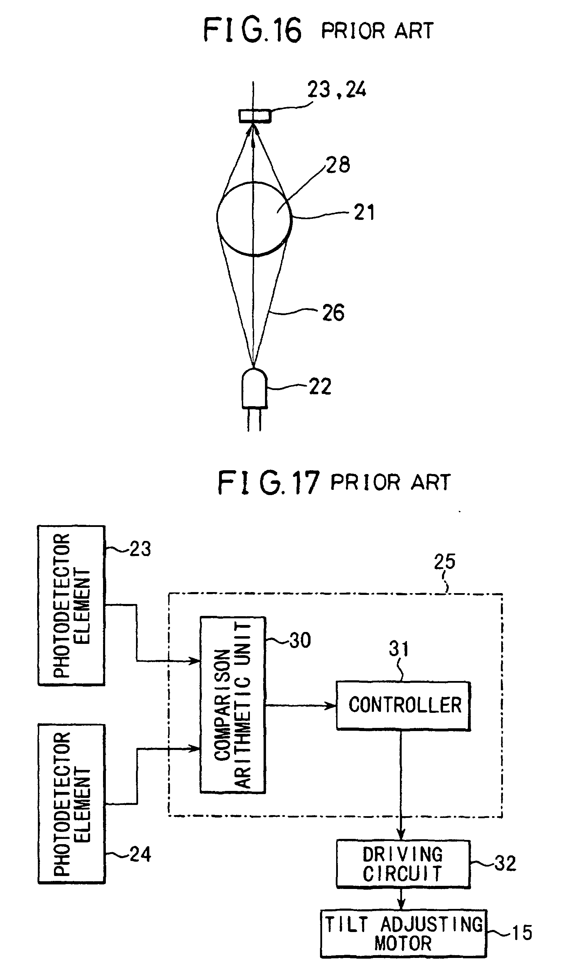

In each sensor a light emitting element 22, such as an LED, is arranged on an axis perpendicular to the axis of the bubble tube 21, with a pair of photodetector elements 23 and 24 located on the opposite side of the bubble tube 21. The detectors 23 and 24 are symmetrically positioned with respect to the optical axis of the light emitting element 22 and have a predetermined distance between them. Signals from the photodetector elements 23 and 24 are inputted to a tilt detection controller 25 see Fig. 17.

As shown in Figs 14 and 15, the central components of the detection light 26 emitted from the light emitting element 22 are caused to diverge when passing through the air bubble 27 of the bubble tube 21, whilst the peripheral components are caused to converge on to the photodetector elements 23 and 24. The photodetector elements 23 and 24 detect the amount of light received from the tube. t his amount varying according to the amount of the light passing through the air bubble 27 and the amount of light passing through the liquid portion 28 only.

As shown in Fig. 17, the tilt detection controller 25 comprises a comparison arithmetic unit 30 where photodetection signals from the photodetector elements 23 and 24 are inputted, and a controller 31 for issuing a control signal based on a signal derived from the comparison arithmetic unit 30 and based on the difference, if any, of the signals from the detector units 23 and 24. A driving circuit 32 drives the tilt adjusting motor 15 based on the control signal from the controller 31.

The passage of the detection light 26 through the bubble tube 21 will now be described in more detail and referring to Figs. 14 to 16 and Fig. 18.

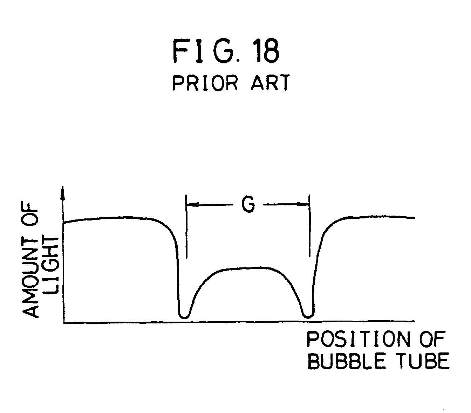

Fig. 14 shows how the detection light 26 passes through the bubble tube 21 in the longitudinal direction. At the centre and because the detection light 26 passes substantially linearly through the air bubble 27 and the liquid portion 28, the central core of the detection light 26 is received by the photodetector elements 23 and 24. However, at boundary between the air bubble 27 and the liquid 28, the detection light 26 is reflected so that it is not received by the photodetector elements 23 and 24. Fig. 18 shows amount of light detected by the detectors 23 and 24 relative to the longitudinal direction of the bubble tube 21. The portion with the least amount of light represents the boundary portion between the air bubble 27 and the liquid portion 28.

Fig. 15 is a cross-sectional view through the air bubble 27 of the bubble tube 21. Light passing substantially linearly through the bubble tube 21 reaches the photodetector elements 23 and 24. Except for those central components, other components of the detection light 26 passing through the air bubble 27 are diverged by an amount depending on the radius of curvature of the air bubble 27 and of the bubble tube 21. By contrast components of the detection light 26 passing through only through the liquid portion 28 around the bubble are converged by refraction toward the photodetector elements 23 and 24. Other components of the detection light passing through boundary surface of the air bubble are mostly reflected at the surface of the bubble and are not received by the photodetector elements.

Fig.16 is a cross-sectional view of the liquid portion 28. Components of the detection light 26 passing linearly through the centre of the bubble tube 21 reach the photodetector elements 23 and 24. Similarly, compounds passing through the liquid portion 28 of the bubble tube 21, except the central portion, converge onto the photodetector elements 23 and 24 due to refraction. Preferably the photodetector elements 23 and 24 are of a small width relative to the tube diameter in order to reduce the incidence of noise light, and because the photodetector elements 23 and 24 have only a small width, only the detection light 26 components actually passing through the bubble tube 21 are detected, and this increases photodetection contrast.

Fig. 18 represents graphically the changing amount of transmitted light relative to the length of the bubble tube 21. At the boundary of the air bubble 27, the detection light 26 is mainly reflected, so that the amount of transmitted light is extremely low. By passing through nearby the boundary of the air bubble 27, the optical path of the detection light 26 is changed, and its reflection increases, to that the proportion of detection light 26 passing through the bubble tube 21 to the detection is further reduced. Accordingly, the range G between two boundaries of the air bubble 27, is the range where the amount of detected light is reduced, and when the air bubble 27 moves, the range G will also move. Thus, amount of transmitted light detected by the photodetector elements 23 and 24 will change, thus enabling any tilt to be detected by the change in the relative outputs of the photodetector elements 23 and 24.

As shown in Fig. 14, and in the case the bubble tube 21 is at the horizontal position, the air bubble 27 is at the centre of the bubble tube 21, and amounts of the detection light 26 entering the photodetector elements 23 and 24 are equal to each other. Therefore, after comparison operation at the comparison arithmetical unit 30, there is no deviation between signal from the photodetector element 23 and signal from the photodetector element 24, and no driving signal is issued to the driving circuit 32.

However, if the laser survey instrument is tilted so that the air bubble 27 of the bubble tube 21 is moved rightward in Fig. 14, the components of the detection light 26 entering the photodetector element 24 are reduced, and components of the detection light 26 entering the photodetector element 23 are increased. Accordingly, there is a difference in the photodetection signals inputted to the comparison arithmetic unit 30. The resultant deviation signal is inputted to the controller 31 which in turn issues a control signal to the driving circuit 32, which then drives the tilt adjusting motor 15 until the difference in the photodetection signals from the photodetector elements 23 and 24 is eliminated.

As the photodetector elements 23 and 24 any suitable photosensor, CCD or linear sensor may be used.

In the prior art system as described above, there is the disadvantage that detection light 26 passing through the air bubble 27, or the detection light 26 converged by the body of the bubble tube 21, is detected by the photodetector elements 23 and 24. Accordingly, as seen in Fig. 18, there is a degree of photodetection over the range G. this means that in the conventional type tilt detecting device as described above, and where the tilt is detected according to the difference between the light amount in the range G and the light amount on both sides of the range G, the accuracy of the instrument is decreased, if there is any photodetection amount in the range G. Indeed, if the difference in photodetection is small, it is often difficult to detect tilt. One solution to this would be to use a photodetector element with an even narrower width, but this is disadvantageous because the photodetection signal will also be reduced.

The present invention seeks to provide an improved tilt detecting device of improved sensitivity and accuracy.

A prior art document, EP-A-0349074 discloses a bubble tilt detecting device comprising a bubble tube containing a liquid in a bubble of gas, a light source emitting a light beam onto the tube, photodetectors on opposite sides of the tube, means for detecting and comparing the output of the detectors and the plates to reduce the amount of light incident on the detectors. The device operates by blocking detection light that passes through the axis of the bubble tube to increase detection accuracy.

This prior art document does not address the problem of light converged by the peripheral portion of the body of the bubble tube.

According to the present invention there is provided a bubble tube tilt detecting device comprising a bubble tube (21) containing a liquid (28) and a gas bubble (27) formed in the said liquid, a light source (22) positioned to direct a detection light beam onto the bubble tube along an axis, a pair of photodetector elements (23, 24) positioned on the opposite side of the tube from the said light source and equispaced one from the other on opposite sides of the said axis, along the length of the tube, and means (30) for detecting and comparing the output from the two detectors consequent upon the incidence thereon of light transmitted through the bubble tube from the said light source, characterised by the provision of a shading plate (35, 37, 37', 38) located between the bubble tube and the detectors (23, 24) wherein the shading plate comprises at least one slit formed therein parallel to the longitudinal axis of the bubble tube, and the shading plate blocks off the detection light beam refracted by the liquid contained in the peripheral regions of the tube remote from the said bubble.

In one embodiment the shading plate comprises two longitudinal slits, wherein, in addition to the said shading plate, a solid masking plate (29) is provided on or in the proximity of photodetection surfaces of the detectors.

The invention is further described with reference to the accompany drawings, in which:
FIG. 1 is a schematical front view showing a first embodiment of a bubble tilt sensing device according to the present invention;
FIG. 2 (A) and FIG. 2 (B) each represents a side view of the first embodiment of the invention;
FIG. 3 is a view taken along line A - A in Fig. 1;
FIG. 4 is a schematical front view showing a second embodiment of the present invention;
FIG. 5 (A) and FIG. 5 (B) each represents a side view of the second embodiment of the invention;
FIG. 6 is a schematical side view showing a variation of the second embodiment of the present invention;
FIG. 7 is a schematical front view showing a third embodiment of the present invention;
FIG. 8 (A) and FIG. 8 (B) each represents a side view of the third embodiment;
FIG. 9 is a view taken along line B - B in Fig. 7;
FIG. 10 is a side view of another aspect or version of the present invention;
FIG. 11 is a diagram showing the distribution pattern of light passing through the bubble tube in a device according to the present invention;
FIG. 12 is a block diagram of the device of the present invention where a line sensor is used as the photodetector element;
FIG. 13 is a cross-sectional view of a laser survey instrument according to the prior art equipped with a tilt detecting device;
FIG. 14 is a schematical front view of a conventional example;
FIG. 15 is a diagram taken along line C - C in Fig. 14;
FIG. 16 is a diagram taken along line D - D in Fig. 14;
FIG. 17 is a block circuit diagram as used in the conventional example; and
FIG. 18 is a diagram showing distribution of amount of light passing through the bubble tube in the conventional type device.

Referring now to the drawings:

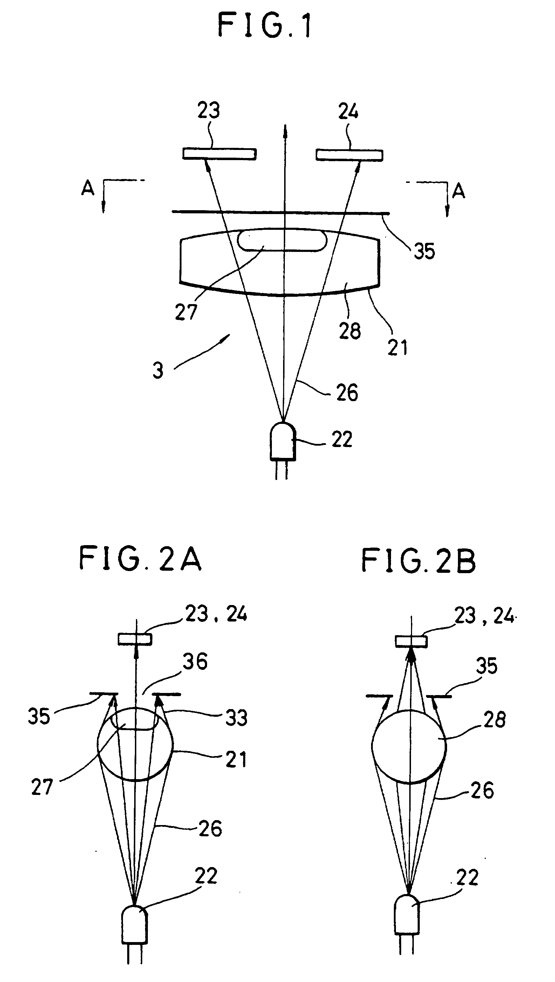

Fig. 1 to Fig. 3 represent a first embodiment of the present invention. In these figures the same components as in Fig. 14 to Fig. 16, are given the same reference numerals. Basically the arrangement of the tilt detecting device is the same as that of Fig. 17. Accordingly, any further detailed description figure is not necessary except in relation to the modifications introduced by the present invention.

As in the prior art, the bubble tilt detection device comprises a bubble tube 21, a light emitting element 22, such as an LED is positioned to one side of the tube and a pair of photodetector elements 23 and 24 positioned on the other side with the bubble tube 21. The detecting elements are symmetrically disposed with respect to the optical axis of the light emitting element 22 with a predetermined distance between them. In accordance with this invention a light shading plate 35 is disposed between the photodetector elements 23 and 24 and the bubble tube 21 and in parallel to the photodetector elements 23 and 24. The light shading plate 35 is provided with a slit 36 which is parallel to the axis of the bubble tube 21 and has such a width that detection light 26 converged by body of the bubble tube 21 is blocked off as shown in Fig. 2. Signals from the photodetector elements 23 and 24 are inputted to a tilt detection controller 25.

Fig. 2 (A) is a cross-sectional view through the air bubble 27. As before, central components of the detection light 26, will pass substantially linearly through the bubble tube to the photodetector elements 23. Light components, other than the central light components, which pass through the bubble are diverged by an amount depending upon radius of curvature of each of the air bubble and the bubble tube. Finally, peripheral components 33 of the detection light 26, which pass through the liquid portion 28 of the bubble tube 21 but not through or near the bubble still converge due to refraction, but in this case are blocked off from the photodetector elements 23 and 24 by the light shading plate 35. In this way only the central components of the transmitted light reach the photodetector elements 23 and 24.

Accordingly, amount of light transmitted and detected in the range G is decreased. The difference between the amount of light in the range G and amount of detection light 26 which passes through the liquid portion 28 of the bubble tube 21 without the air bubble 27, is thus increased. Consequently, if the air bubble 27 moves in the bubble tube 21, e.g. if the bubble tube 21 is tilted, a big difference occurs in the relative amounts of light detected by the photodetector elements 23 and 24. The greater therefore is the difference to be calculated by the comparison arithmetic unit 30, and the greater the output signal all contributing to an improvement of detection accuracy.

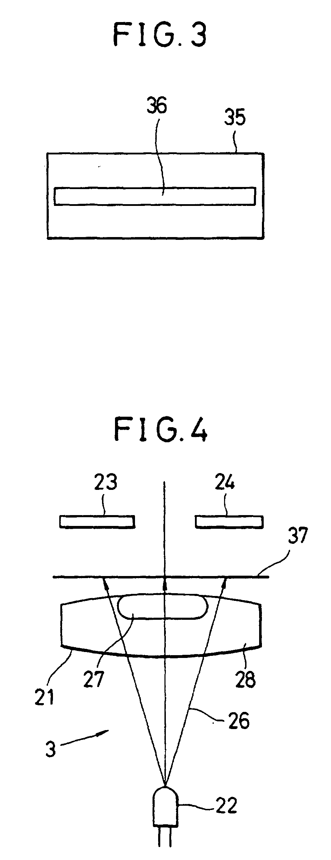

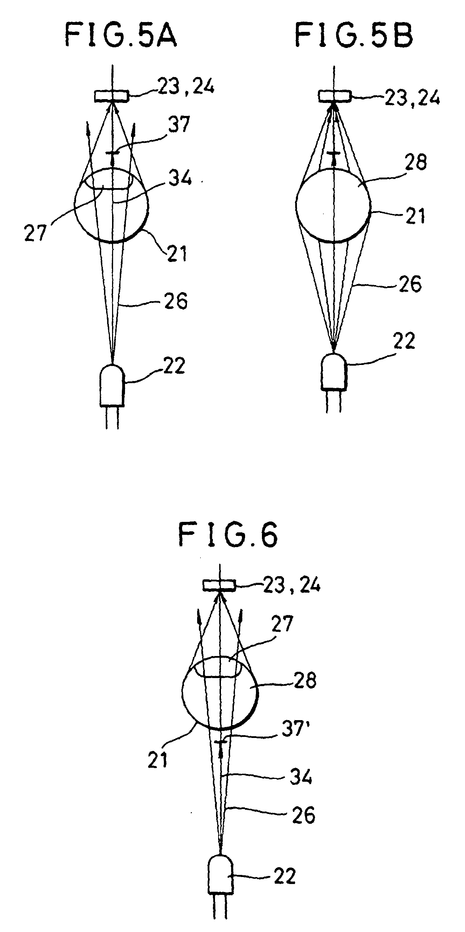

Fig. 4 and Fig. 5 represent a second embodiment of the invention in which a light shading plate 37 is arranged between the photodetector elements 23 and 24 and the bubble tube 21. The light shading plate 37 is in form of an oblong with a width narrower than the photodetector elements 23 and 24. In this case the shading plate 3 7 blocks off axially transmitted light components 34 which pass along or near the axis of the bubble tube 21.

In the second embodiment as described above, almost all of the light components of the detection light 26 passing through the centre of the air bubble 27 are blocked off, and only the components of the detection light 26 passing through portion near the body of the bubble tube 21 reach the photodetector elements 23 and 24. As a result, photodetection amounts of the photodetector elements 23 and 24 are extensively reduced, and difference between light amount of the detection light 26 passing through the air bubble 27 and light amount of the detection light 26 passing through the liquid portion 28 of the bubble tube 21 without the air bubble 27 is increased. Accordingly, as the air bubble 27 moves in the bubble tube 21, e.g. due to tilting, an even bigger difference occurs between the amounts of light detected by the photodetector elements 23 and 24. In turn, the difference calculated by the comparison arithmetic unit 30 is greater and this again contributes to improvement of detection accuracy.

In the alternative arrangement of Fig. 6 the light shading plate 37' is arranged between the bubble tube 21 and the light emitting element 22, and blocks off axially transmitted light components 34 of the detection light 26 emitted from the light emitting element 22 before the light components enter the bubble tube 21. The effect is the same as in Fig. 5.

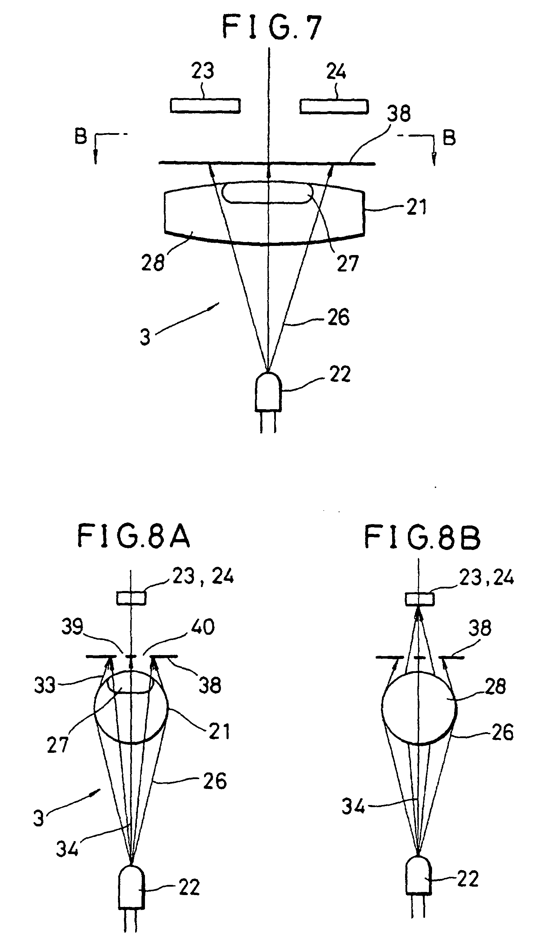

Figs. 7 to 9 represent a third embodiment of the present invention, where a light shading plate 38 is arranged between the photodetector elements 23 and 24 and the bubble tube 21 as in the first embodiment. However, in this case, the light shading plate 38 is provided with two slits, 39 and 40, which are parallel to the axis of the bubble tube 21.

Of the detection light 26 passing through the bubble tube 21, the light shading plate 38 blocks off the peripheral transmitting light components 33 and the axis transmitting light components 34. Therefore, almost all of the light components of the detection light 26, which have passed through the portion having the air bubble 27, are blocked off, and the amounts of light detected by the photodetector elements 23 and 24 are extensively decreased. As a result the ratio of the amount of detection light 26 passing through the liquid portion 28 of the tube, other than through the air bubble 27, to the amount of light in the range G is further increased. Thus, the deviation obtained by the calculation of the comparison arithmetic unit 30 is greatly increased, and this further contributes to an improvement in detection accuracy.

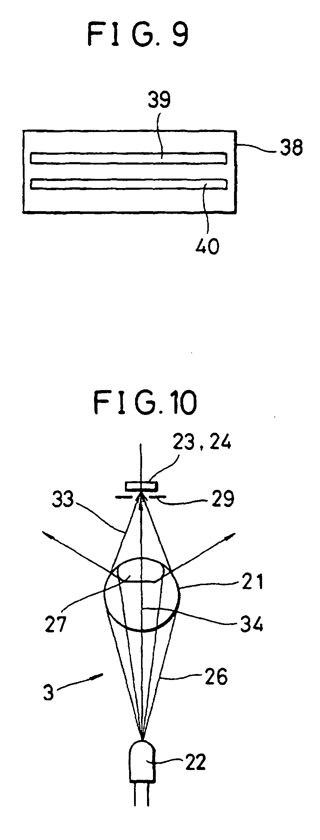

Turning now to Fig. 10, photodetector elements 23 and 24 must necessarily have a certain size so that a certain amount of noise light is inevitable. For example, detection light 26 impinging the air bubble 27 either passes straight through or diverges according to its angle of incidence on the bubble. Whilst most of the diverged light may miss the detectors some of the diverged light components may still reach the photodetection surface and be turned to noise light. With respect to noise light, it is preferable that the photodetection surface is oblong in the longitudinal direction of the bubble tube and narrow in width and preferably as shown in Fig. 10, a mask 29 is provided closely adjacent or in close proximity of the photodetection surfaces of the photodetector elements 23 and 24. In this way the incidence of noise light can be reduced.

If desired, the use of the mask 29 can be combined with a light shading plate 38 as shown, for example, in Fig. 8. By combining the mask 29 with the light shading plate 38, the components of the detection light passing through the portion with the air bubble 27 are blocked off by the light shading plate 38, and entering of the noise light is prevented by the mask 29, and this further contributes to improvement of detection accuracy.

By providing the light shading plates 35, 37, 37' and 38, the total amount of light available to be detected by the photodetector elements 23 and 24 is decreased, but the sensitivity of the system is so much higher that there is no problem. Thus, by increasing the ratio of the amount of detection light 26 passing through the liquid portion 28 of the tube, other than through the air bubble 27, to the amount of light transmitted in the range G, it is possible, in accordance with this invention, to improve detection accuracy.

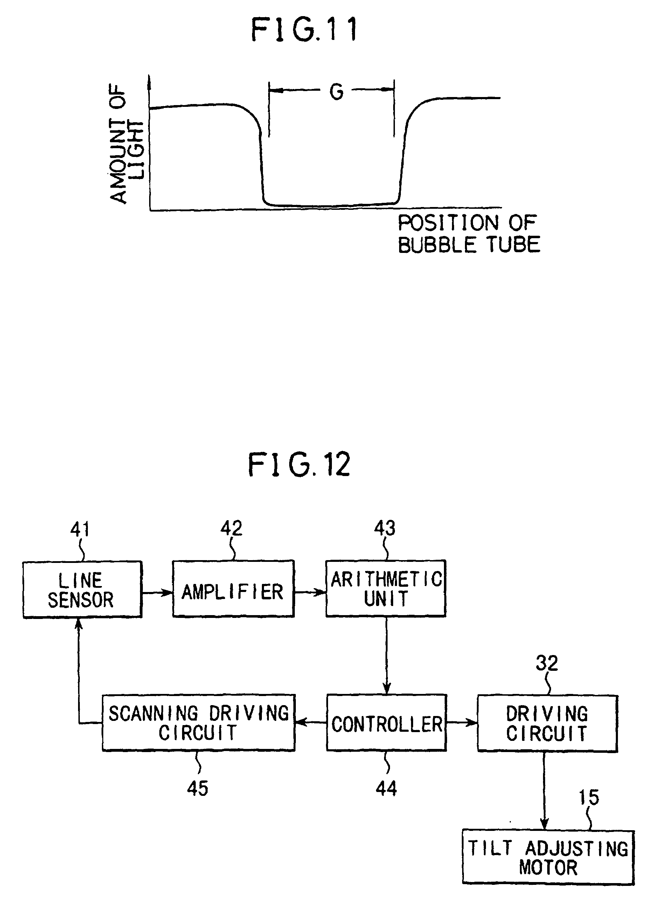

This is shown by Fig. 11 which represents a curve showing the distribution of light detected by the photodetector elements 23 and 24 shielded the present invention, and measured along the length of the tube. This indicates that there is almost no photodetection in the air bubble range G, and that the ratio of the amount of light transmitted in the range G transmitted by the liquid portion is high. If that difference is compared with the range G in Fig. 18, which shows light amount distribution in the conventional type device, the blocking effect of the shading plates 35, 37, 37' and 38 of this invention becomes evident.

In the prior art any suitable photosensor, CCD or linear sensor, line sensor, etc. may be used as the elements 23 and 24. A suitable circuit for use in the invention when line sensors are used as the photodetector elements 23 and 24, is shown in Fig. 12.

A controller 44 issues a scanning driving signal to a scanning driving circuit 45 and the scanning driving circuit 45 in turn drives a line sensor 41 based on the scanning driving signal from the controller 44. The photodetection signal from the line sensor 41 is amplified by an amplifier 42 and is inputted to an arithmetic unit 43. The arithmetic unit 43 then calculates the distribution of photodetection signal and then comparing the calculated distribution with a reference distribution, amount of tilt can be calculated, and the result of the calculation inputting to the controller 44. The controller 44 then drives the tilt adjusting motor 15 via the driving circuit 32, in order to correct the tilt.

In summary, therefore, the present invention seeks to increase the difference and ratio of light transmitted through the air bubble of a light transmission type electrical bubble tube and the amount transmitted through the liquid portion, thus contributing to an improvement in tilt detection accuracy.

## Claims

1. A bubble tube tilt detecting device comprising a bubble tube (21) containing a liquid (28) and a gas bubble (27) formed in the said liquid, a light source (22) positioned to direct a detection light beam onto the bubble tube along an axis, a pair of photodetector elements (23, 24) positioned on the opposite side of the tube from the said light source and equispaced one from the other on opposite sides of the said axis, along the length of the tube, and means (43) for detecting and comparing the output from the two detectors consequent upon the incidence thereon of light transmitted through the bubble tube from the said light source, **characterised by** the provision of a shading plate (35, 37, 37', 38) located between the bubble tube (21) and the detectors (23, 24) wherein the shading plate comprises at least one slit formed therein parallel to the longitudinal axis of the bubble tube (21), thus the shading plate being suitable for blocking off the detection light beam refracted by the liquid contained in the peripheral regions of the tube remote from the said bubble.

2. A device according to Claim 1, **characterised in that** the shading plate (38) comprises two longitudinal slits (39, 40) formed therein parallel to the longitudinal axis of the bubble tube (21) and equispaced one from the other on opposite sides of the axis of the bubble tube, thus the shading plate being suitable for blocking off the detection light beam refracted by the liquid contained in the peripheral regions of the tube remote from the said bubble and the detection light beam which passes through the axis of the bubble tube.

3. A device according to Claim 1, wherein, in addition to the said shading plate, a solid masking plate (29) is provided on or in the proximity of photodetection surfaces of the detectors.

## Patentansprüche

1. Libellen-Neigungsdetektorvorrichtung, aufweisend ein Libellenrohr (21), das eine Flüssigkeit (28) und eine in der Flüssigkeit ausgebildete Gasblase (27) aufweist, eine Lichtquelle (22), die für die Richtung eines Detektionslichtstrahls auf die Libelle entlang einer Achse positioniert ist, ein Paar von Fotodetektor-Elementen (23, 24), die an der der Lichtquelle entgegengesetzten Seite des Rohrs und in gleichen Abständen voneinander an entgegengesetzten Seiten der Achse entlang der Länge des Rohrs angeordnet sind, und Mittel (43) zum Detektieren und Vergleichen der sich auf den Einfall von Licht hin ergebenden Ausgabe von den beiden Detektoren, das von der Lichtquelle durch die Libelle hindurch übertragen wird, **gekennzeichnet durch** das Vorsehen einer zwischen dem Libellenrohr (21) und den Detektoren (23, 24) angeordneten Abblend-Platte (35, 37, 37', 38), wobei die Abblend-Platte mindestens einen Schlitz aufweist, der in ihr parallel zur Längsachse des Libellenrohrs (21) ausgebildet ist, sodass die Abblendplatte geeignet ist, den Detektionslichtstrahl zu blockieren, der **durch** die Flüssigkeit gebrochen wird, die in den von der Gasblase entfernten peripheren Bereichen des Rohrs enthalten ist.

2. Vorrichtung gemäß Anspruch 1, **dadurch gekennzeichnet, dass** die Abblend-Platte (38) zwei Längsschlitze (39, 40) aufweist, die in ihr parallel zur Längsachse des Libellenrohrs (21) und an entgegengesetzten Seiten der Achse der Libelle in gleichem Abstand voneinander ausgebildet sind, sodass die Abblend-Platte geeignet ist, den Detektionslichtstrahl, der von der Flüssigkeit gebrochen wird, die in von der Blase entfernten peripheren Bereichen des Rohrs enthalten ist, sowie den Detektionslichtstrahl zu blockieren, der durch die Achse des Libellenrohrs hindurchtritt.

3. Vorrichtung gemäß Anspruch 1, wobei zusätzlich zur Abblendplatte eine feste Maskenplatte (29) auf oder in der Nähe der Photodetektier-Flächen der Detektoren vorgesehen ist.

## Revendications

1. Dispositif de détection d'inclinaison à tube à bulle, comprenant un tube à bulle (21) contenant un liquide (28) et une bulle de gaz (27) formée dans ledit liquide, une source de lumière (22) disposée pour diriger un faisceau de lumière de détection sur le tube à bulle le long d'un axe, une paire d'éléments photodétecteurs (23, 24) disposés sur le côté du tube opposé à ladite source de lumière et de même espacement mutuel sur les côtés opposés dudit axe, sur la longueur du tube, et un moyen (43) pour détecter et comparer la production des deux détecteurs à la suite de l'incidence sur ceux-ci de la lumière transmise à travers le tube à bulle depuis ladite source de lumière, **caractérisé par** la mise en oeuvre d'une plaque à effet d'ombre (35, 37, 37', 38) située entre le tube à bulle (21) et les détecteurs (23, 24), dans lequel la plaque à effet d'ombre comprend au moins une fente qui y est formée parallèlement à l'axe longitudinal du tube à bulle (21), si bien que la plaque à effet d'ombre est à même de bloquer le faisceau de lumière de détection réfracté par le liquide contenu dans les régions périphériques du tube éloignées de ladite bulle.

2. Dispositif selon la revendication 1, **caractérisé en ce que** la plaque à effet d'ombre (38) comprend deux fentes longitudinales (39, 40) qui y sont formées parallèlement à l'axe longitudinal du tube à bulle (21) et de même espacement mutuel sur les côtés opposés de l'axe du tube à bulle, si bien que la plaque à effet d'ombre est à même de bloquer le faisceau de lumière de détection réfracté par le liquide contenu dans les régions périphériques du tube éloignées de ladite bulle et le faisceau de lumière de détection qui passe à travers l'axe du tube à bulle.

3. Dispositif selon la revendication 1, dans lequel, en plus de ladite plaque à effet d'ombre, une plaque de masquage pleine (29) est aménagée sur ou à proximité des surfaces de photodétection des détecteurs.
